(19) Europäisches Patentamt

European Patent Office

Office européen des brevets

(11) EP 1 537 515 B1

(12) EUROPÄISCHE PATENTSCHRIFT

(45) Veröffentlichungstag und Bekanntmachung des Hinweises auf die Patenterteilung:
**22.03.2006 Patentblatt 2006/12**

(51) Int Cl.:
*G06K 7/00* (2006.01)  *G06K 19/077* (2006.01)
*B60C 23/04* (2006.01)

(21) Anmeldenummer: **03794902.1**

(22) Anmeldetag: **20.08.2003**

(86) Internationale Anmeldenummer:
**PCT/EP2003/009237**

(87) Internationale Veröffentlichungsnummer:
**WO 2004/025543 (25.03.2004 Gazette 2004/13)**

(54) **VORRICHTUNG ZUM INDUKTIVEN ÜBERTRAGEN VON ENERGIE UND/ODER DATEN**

DEVICE FOR THE INDUCTIVE TRANSMISSION OF POWER AND/OR DATA

DISPOSITIF DE TRANSMISSION INDUCTIVE D'ENERGIE ET/OU DE DONNEES

(84) Benannte Vertragsstaaten:
**DE FR GB**

(30) Priorität: **09.09.2002 EP 02020185**

(43) Veröffentlichungstag der Anmeldung:
**08.06.2005 Patentblatt 2005/23**

(73) Patentinhaber: **SIEMENS AKTIENGESELLSCHAFT**
**80333 München (DE)**

(72) Erfinder: **ZIMMER, Herbert**
**93049 Regensburg (DE)**

(56) Entgegenhaltungen:
**WO-A-97/49076        DE-A- 19 703 029**
**US-A- 5 491 483**

**Beschreibung**

Die Erfindung betrifft eine Vorrichtung zum induktiven Übertragen von Energie und/oder Daten von einem Primärkreis über einen Zwischenkreis zu einem Sekundärkreis.

Eine solche Vorrichtung ist beispielsweise aus der Patentschrift US 5,491,483 A bekannt. Diese Vorrichtung weist eine Basisstation (Primärkreis) auf, die über eine Antenne Fragesignale aussendet und Antwörtsignale empfangen kann. Ein Transponder, der auf empfangene Fragesignale automatisch ein Antwortsignal zurücksendet, weist einen Zwischenkreis auf, der die Antenne des Transponders bildet. Die Antenne ist über einen Impedanzwandler mit einem Schwingkreis (Sekundärkreis) verbunden. Der Impedanzwandler dient dazu, die niedrige Impedanz der Antenne an die hohe Impedanz des Schwingkreises anzupassen. Mit dieser Vorrichtung wird Energie zu dem Transponder übertragen, dort in einem Energiespeicher zwischerigespeichert und mit Hilfe dieser Energie ein Antwortsignal zurück zu der Basisstation gesendet.

Damit der Energiespeicher möglichst gut aufgeladen wird, sollte die Eingangsspannung des Transponders beim Empfang des Fragesignals möglichst groß sein. Da jedoch die kleine Güte des Zwischenkreises (Ringantenne) durch die induktive Ankopplung einen stark dämpfenden Einfluss auf den Sekundärkreis hat, wurde bisher versucht, durch verbesserte Ankopplung der Kreise die Übertragung zu verbessern. So können beispielsweise widerstandsärmere Antennen oder Antennenspulen mit mehreren Windungen verwendet werden.

Aus der Patentschrift US 5,479,171 ist ebenfalls eine solche Vorrichtung zum induktiven Übertragen von Energie oder Daten von einem Primärkreis über einen Zwischenkreis auf einen Sekundärkreis bekannt. Damit möglichst effektiv Daten und Energie von der Basisstation zum Transponder und zurück übertragen werden können, wird dort versucht, die Kreise so auszugestalten, dass die Güten sowohl des Zwischenkreises als auch des Sekundärkreises möglichst hoch sind. Denn eine Verstimmung oder eine Dämpfung des Sekundärkreises beeinflussen den Lesebereich des Transponders ungünstig.

Zur Verbesserung der Ankopplung weist der Zwischenkreis eine Antennenkoppelspule auf, die galvanisch mit der Antenne verbunden ist.

Der Erfindung liegt die Aufgabe zugrunde, eine Vorrichtung zum induktiven Übertragen von Energie und/oder Daten von einem Primärkreis über einen Zwischenkreis zu einem Sekundärkreis und zurück zu schaffen, bei der Daten oder Energie möglichst effektiv übertragen werden.

Gelöst wird diese Aufgabe durch eine Vorrichtung mit den Merkmalen nach Patentanspruch 1. Dabei wird nicht versucht, die Güte eines Zwischenkreises zu erhöhen, sondern gezielt die magnetische Kopplung zwischen zwei Kreisen zu reduzieren und damit die Bedämpfung eines der Kreise zu verringern. Die magnetische Kopplung zwischen Zwischenkreis und Sekundärkreis wird dabei durch eine zusätzliche Streuinduktivität reduziert, die in den Sekundärkreis eingebracht wird. Die Streuinduktivität ist dabei von einer Sekundärspule magnetisch entkoppelt. Die magnetische Kopplung auf den Sekundärkreis kann auch durch ein speziell ausgebildetes Koppelelement reduziert werden. Hierzu weist das Koppelelement einen Streuzweig auf, dessen magnetischer Fluss nicht zugleich Koppelfluss von sowohl dem Sekundärkreis als auch dem Zwischenkreis ist.

Dies hat den Vorteil, dass die Gesamteffektivität der Übertragung vom Primärkreis auf den Sekundärkreis verbessert wird. Insbesondere wird dadurch die Spannung am Ausgang des Sekundärkreises trotz reduzierter magnetischer Kopplung zwischen dem Zwischenkreis und dem Sekundärkreis größer, wenn die Eingangsspannung gleich bleibt. Durch die Reduzierung der magnetischen Kopplung wirken sich Änderungen, die durch äußere Einflüsse, wie Temperatur, bedingt sind, weniger auf eine Änderung der Güte oder der Induktivität in dem Sekundärkreis aus. Die Übertragung von Daten oder Energie kann somit sicher - selbst bei größeren Toleranzschwankungen - vonstatten gehen.

Vorteilhafte Weiterbildungen der Erfindung werden durch die Unteransprüche widergegeben. So kann die das Koppelelement durch einen Streuübertragerkern gebildet wird, der zumindest einen Koppelzweig und einen Streuzweig aufweist, wobei der magnetische Fluss des Streuzweigs nicht zugleich mit der Sekundärspule und dem Zwischenkreis induktiv gekoppelt ist.

Eine gute Reduzierung der magnetischen Kopplung zwischen Zwischenkreis und Sekundärkreis wird durch ein Koppelelement erreicht, das aus einem permeablen Material, vorzugsweise ein Material mit einer hohen Permeabilität, hergestellt ist.

Durch konstruktive Gestaltung der Querschnitte und der Permeabilität des Materials kann die Höhe der Streuinduktivität gezielt eingestellt und somit die magnetische Anpassung der Kopplung genau vorgegeben werden.

Die magnetische Kopplung von Zwischenkreis und Sekundärkreis Wird also schlechter. Die Gesamtübertragungseigenschaften vom Primärkreis auf den Sekundärkreis verbessern sich jedoch.

Vorzugsweise wird eine solche Vorrichtung für ein Reifendruckmesssystem eines Kraftfahrzeugs verwendet. Dabei befindet sich der Primärkreis auf der Fahrzeugseite in der Nähe eines jeden Rades. Der Zwischenkreis sowie der Sekundärkreis sind im Reifen angeordnet. Durch induktive Übertragung von Energie und/oder Daten können Identifikatiönsdaten des Reifens, Druckoder Temperaturwerte der Reifen und sonstige Daten von dem Transponder im Reifen abgefragt werden.

Die Vorrichtung zum induktiven Übertragen von Energie und/oder Daten kann überall dort verwendet werden, wo eine Übertragung von einem Primärkreis über einen Zwischenkreis zu einem Sekundärkreis induktiv stattfindet. Insbesondere wird die Erfindung dort verwendet, wo der Zwischenkreis und der Sekundärkreis sich räumlich gegenüber dem Primärkreis verändern können und der Zwischenkreis eine geringe Güte aufweist.

Ausführungsbeispiele der Erfindung werden im Folgenden anhand der schematischen Zeichnungen näher erläutert. Es zeigen:

Figur 1    ein Blockschaltbild einer erfindlingsgemäßen Vorrichtung zum induktiven Übertragen von Energie und/oder Daten,

Figuren    2A und 2B Ausführungsbeispiele eines Sekundärkreises der Vorrichtung gemäß Figur 1,

Figuren    3A bis 3C Betriebsgrößen des Primärkreises nach den Figuren 2A und 2B,

Figur 4    ein Verwendüngsbeispiel der Vorrichtung für ein Reifendruckmesssystem in einem Kraftfahrzeug,

Figur 5    eine Anordnung der Vorrichtung in einem Reifen eines Kraftfahrzeugs und

Figur 6    ein Blockschaltbild einer Basisstation (Primärkreis) der Vorrichtung.

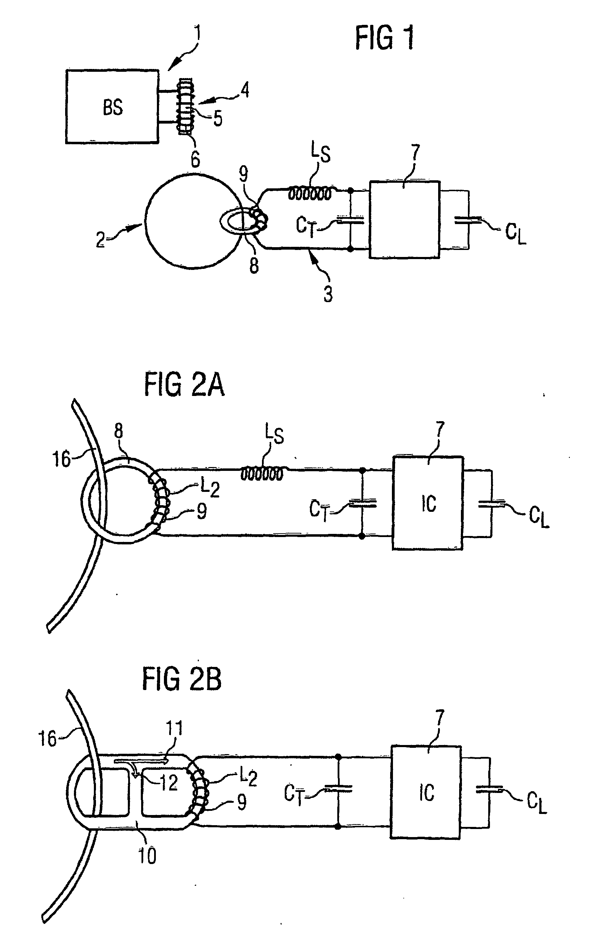

Eine erfindungsgemäße Vorrichtung dient zum induktiven Übertragen von Energie und/oder Daten von einem Primärkreis 1 (Figur 1) über einen Zwischenkreis 2 zu einem Sekundärkreis 3 und zum Rückübertragen von Daten zu dem Primärkreis 1. Die Übertragung von Daten kann dabei codiert oder verschlüsselt erfolgen. Vorzugsweise findet die Übertragung im NF=Bereich, beispielsweise bei 125 kHz statt.

Der Primärkreis 1 (auch als Basisstation bezeichnet) weist gemäß Figur 1 eine Antenne 4 auf, die durch eine auf einen Kern 5 gewickelte Spule 6 (auch als Primärspule bezeichnet) gebildet wird. Von der Basisstation werden Daten oder Energie moduliert induktiv ausgesendet sowie Daten induktiv empfangen.

Von der Basisstation werden Energie oder Daten über einen Zwischenkreis 2 zu einem Sekundärkreis 3 induktiv übertragen: Der Zwischenkreis 2 dient hier lediglich als Sende-/Empfangsantenne für den Sekundärkreis 3. Ein Koppelelement zwischen Zwischenkreis 2 und Sekundärkreis 3 dient als Medium zum Übertragen von Energie oder Daten zwischen den beiden Kreisen. In Figur 1 ist das Koppelelement als magnetisch leitender Ringkern 8 ausgebildet.

Die von dem Sekundärkreis 3 empfangenen Signale werden einem Tränsponder-IC 7 zugeführt. Dieses wertet Daten aus und bereitet seinerseits Daten zum Zurücksenden auf. Daher wird der Sekundärkreis 3 zusammen mit dem Zwischenkreis 2 auch als Transponder bezeichnet.

Der Zwischenkreis 2 ist vorteilhaft als Kurzschlussspule 16 ausgebildet (d.h. eine Spule mit nur einer einzigen Windung, die kurzgeschlossen ist) und dient als Antenne zum Empfangen oder Senden von Energie und/oder Daten der Basisstation und zum Weiterleiten mittels induktiver Ankopplung von Energie öder Daten an den Sekundärkreis 3.

Der Zwischenkreis 2 ist induktiv mit dem Sekundärkreis 3 über das Koppelelement gekoppelt. Hierzu dient vorteilhaft der magnetischer Ringkern 8, der einerseits in die Kurzschlusspule 16 eingreift und somit dessen Magnetfeld in sich einkoppelt. Auf den Ringkern 8 ist andererseits eine Sekundärspule 9 gewickelt, die Teil des Sekundärkreises 3 ist. Die Sekundärspule 9 bildet zusammen mit einem Kondensator $C_T$ einen Schwingkreis des Sekundärkreises 3. Über den Ringkern 8 wird eine induktive Kopplung zwischen dem Zwischenkreis 2 und der Sekundärspule 9 hergestellt, wodurch Daten oder Energie übertragen werden können.

Der Sekundärkreis 3 ist mit dem Transponder-IC 7 verbunden, in dem die empfangenen Daten oder Energie ausgewertet und die zu sendenden Daten aufbereitet werden. Mit der empfangenen Energie wird ein Energiespeicher (hier ein Ladekondensator $C_L$) mit Energie auf oder nachgeladen, die anschließend für das Auswerten von Empfangenen Signalen und das Aufbereiten sowie Rücksenden der Daten verwendet wird. Somit braucht der Transponder keine eigene Energieversorgung in Form einer Batterie.

Der Zwischenkreis 2 weist - beispielsweise materialbedingt - nur eine sehr geringe Güte auf. Durch die magnetische Kopplung vom Zwischenkreis 2 über das Koppelelement (Ringkern 8) auf den Sekundärkreis 3 überträgt sich diese geringe Güte auf den Sekundärkreis 3. Durch diese Gütenabsenkung wird die Übertragung von Daten oder Energie zwischen den beiden verschlechtert.

Um die Effektivität der gesamten Übertragung vom Primärkreis 1 zum Sekundärkreis 3 zu verbessern, wird erfindungsgemäß die magnetische Kopplung zwischen dem Zwischenkreis 2 und dem Sekundärkreis 3 gezielt reduziert. Dies wird im Folgenden genauer dargelegt.

Durch die Erfindung soll die Ankopplung vom Zwischenkreis 2 auf den Sekundärkreis 3 verringert werden. Zudem soll eine möglichst hohe Spannungsübertragung erreicht werden, damit der Energiespeicher gut geladen wird, um die Energie für das Zurücksenden von Daten bereitzustellen. Außerdem sollen die Betriebsinduktivitäten und die Betriebsgüten im Sekundärkreis 3 gegen Parameterschwankungen beim Betreiben der Vorrichtung stabilisiert werden.

Dies kann dadurch erreicht werden, dass in den Sekundärkreis 3 eine Streuinduktivität $L_S$ eingefügt wird, durch die die magnetische Kopplung zwischen Zwischenkreis 2 und Sekundärkreis 3 zwar erniedrigt, aber das Übertragungsverhalten optimiert wird.

Die zusätzliche Streuinduktivität $L_S$ kann gemäß Figur 2A durch eine von der Sekundärspule 9 (mit der Induktivität $L_2$) induktiv entkoppelte Streuinduktivität $L_S$ gebildet werden, die in Serie mit der Sekundärspule 9 angeordnet ist. Die Streuinduktivität $L_S$ ist nicht mit dem Ringkern 8 induktiv gekoppelt, reduziert jedoch indirekt die magnetische Kopplung, da sie in Reihe zu der Sekundärspule 9 angeordnet ist und dadurch Übertragungseigenschaften des Schwingkreises beeinflusst.

Zusätzlich zu dem Einbringen der Streuinduktivität $L_S$ oder auch für sich alleine kann das Koppelelement als speziell ausgebildeter Streuübertragerkern 10 (Figur 2B) ausgebildet sein. Hierbei weist der Streuübertragerkern 10 einen Koppelzweig 11 und einem Streuzweig 12 auf (hier als Doppellochkern mit einem Mittelsteg als Streuzweig 12 ausgebildet.). Der magnetische Fluss durch den Streuzweig 12 ist nicht, zugleich mit dem Zwischenkreis 2 und dem Sekundärkreis 3 verkettet. Dieser Magnetfluss stellt somit einen gezielt eingebrachten Streufluss dar, durch den die magnetische Kopplung verschlechtert wird. Denn nur der Magnetfluss durch den Koppelkreis ist sowohl mit der Kurzschlussspule 16 als auch der Sekundärspule 9 verkettet, nicht jedoch der Streuzweig 12. Dadurch wird die magnetische Kopplung reduziert. Der Streuzweig 12 stellt somit auch eine Streuinduktivität dar, die in den Sekundärkreis 3 zusätzlich eingebracht ist.

Das Verhältnis Koppelfluss zu Streufluss stellt also ein Maß für die Verringerung der magnetischen/induktiven Kopplung zwischen dem Zwischenkreis 2 und dem Sekundärkreis 3 dar. Durch gezielte "Dimensionierung" des Streuflusses, d.h. durch geometrisches Ausgestalten beispielsweise der Kernquerschnitte des Streuübertragerkerns 10 oder der Permeabilität des verwendeten Materials, kann die Reduzierung der magnetischen Kopplung derart ausgebildet werden, dass ein Optimum bei der Gesamtübertragung erreicht wird.

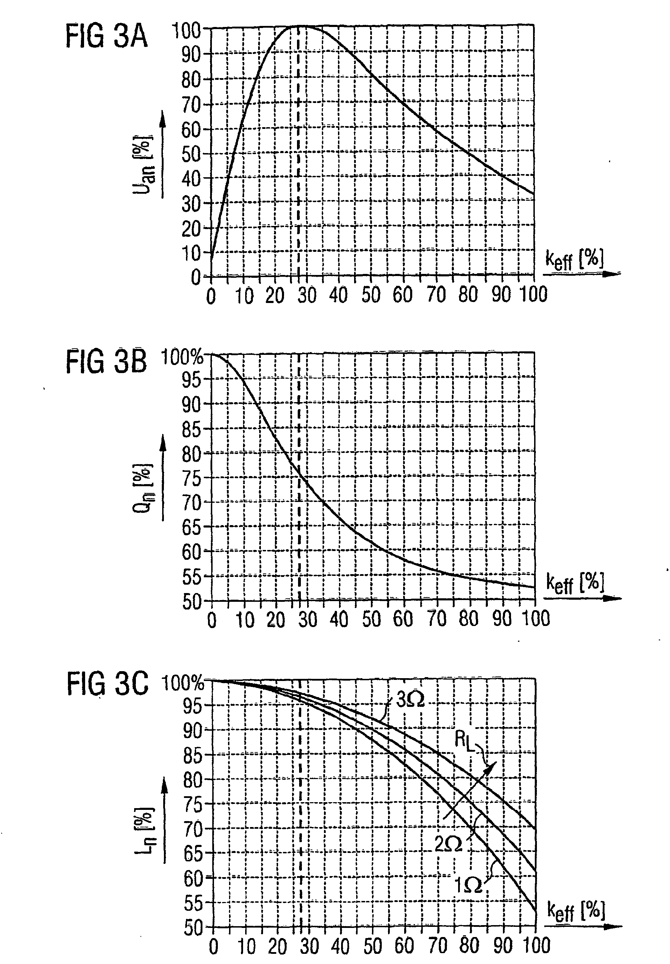

Auf diese Weise wird zwar die magnetische Kopplung zwischen dem Zwischenkreis 2 und dem Sekundärkreis 3 reduziert. Da jedoch der Zwischenkreis 2 eine sehr geringe Güte aufweist, wird durch das Reduzieren der magnetischen Kopplung die Bedämpfung des Sekundärkreises 3 reduziert und somit eine Verbesserung der Gesamtübertragungseigenschaften erreicht, wie anhand der Figuren 3A bis 3B noch ausführlich gezeigt wird.

Der Streuübertragerkern 10 oder auch der Ringkern 8 sind vorteilhaft aus einem Material mit höher Permeabilität hergestellt. Je nach Permeabilität und Querschnitt der Kerne kann die gewünschte Induktivität bei entsprechender Windungszahl erzielt werden.

Die beiden Ausführungsbeispiele nach den Figuren 2A und 2B können auch derart kombiniert werden, dass sowohl eine Streuinduktivität $L_S$ als auch ein Streuübertragerkern 10 vorhanden sind; wobei die beiden zusammen derart dimensioniert sind, dass die magnetische Kopplung so weit reduziert wird, das dies ein optimales Übertragungsverhalten zur Folge hat.

In den Figuren 3A bis 3C sind Betriebsgrößen des gesamten Transponderkreises, d.h. des Zwischenkreises 2 und des Sekundärkreises 3 dargestellt. In der Figur 3A ist die normierte Ausgangsspannung $U_{an}$, die

am Ausgang des Sekundärkreises 3 ansteht, d.h. die Spannung parallel zum Schwingkreiskondensator $C_T$ in Abhängigkeit von einem effektiven Koppelfaktor $k_{eff}$ dargestellt. Der effektive Koppelfaktor $k_{eff}$ kann wie folgt berechnet werden:

$$k_{eff} = \sqrt{\frac{L_2}{L_2 + L_S}} \; ,$$

wobei $L_2$ gleich dem Induktivitätsbeiwert $A_L$ des Ringkerns mal die entsprechende Windungszahl der Kurzschlussspule 16 (n = 1) oder der Sekundärspule (n > 1) im Quadrat ($n^2$) ist und $L_S$ die zusätzliche Streuinduktivität.

Der gesamte Transponderkreis weist bei $k_{eff}$ = 0 % eine normierte Ausgangsspannung $U_{an}$ von 0 % auf. In diesem Fall ist die normierte Sekundärinduktivität $L_2$ = 100%. Bei $k_{eff}$ = 1 (oder 100 %) ist die Ausgangsspannung bei etwa 33 %. Eine maximale normierte Ausgangsspannung $U_{an}$ von 100 % wird bei $k_{eff} \approx 27,5$ % erreicht.

Da es Ziel der Erfindung ist, die Spannungsübertragung zu maximieren, wird nun die Streuinduktivität (und/oder der Streuübertragerkern 10) derart ausgebildet, dass dieser effektive Koppelfaktor von etwa $k_{eff}$ = 27,5 % erreicht wird.

$$L_S = L_2 \left( \frac{1}{k_{eff}^2} - 1 \right)$$

Die normierte Betriebsgüte $Q_n$ des Transponderkreises hat gemäß Figur 3B ihren höchsten Wert bei $k_{eff}$ = 0 % und den kleinsten Wert bei $k_{eff}$ = 100 %. Bei $k_{eff} \approx 27,5$ % ergibt sich noch eine Betriebsgüte $Q_n$ von über 50 %, so dass noch eine ausreichende Güte für den Gesamtschwingkreis vorliegt.

Die normierte Betriebsinduktivität $L_n$ (Figur 3C) ist bei einem Koppelfaktor von 0 % am größten ($L_n$ = 100 %) und nimmt mit steigendem Koppelfaktor $k_{eff}$ ab. Die Betriebsinduktivität $L_n$ hängt u.a. von dem ohmschen Widerstand $R_L$ und der Induktivität L der Kurzschlussspule 16 ab. Die Abhängigkeit der Betriebsinduktivität $L_n$ vom Widerstand $R_L$ der Kurzschlussspule 16 ist in der Figur 3C dargestellt. Bei steigendem Widerstandswert $R_L$ (dargestellt sind die Verläufe bei Widerstandswerten $R_L$ = 1 $\Omega$, 2 $\Omega$ und 3 $\Omega$) wird auch die Betriebsinduktivität $L_n$ größer. Allerdings ist die Betriebsinduktivität bis zu $k_{eff}$ = 27,5 % nahezu konstant. Der Widerstandswert $R_L$ der Kurzschlussspule 16 ist im Wesentlichen vom verwendeten Material und den geometrischen Abmessungen der Kurzschlussspule 16 abhängig. Das Material wird im Wesentlichen durch den entsprechenden Anwendungsfall der Kurzschlussspule 16 bestimmt.

Aus der Figur 3C ist ersichtlich, dass die Betriebsinduktivität bei dem effektiven Köppelfaktor $k_{eff}$ von 27,5 % = selbst bei beträchtlichen Änderungen des Widerstandswertes $R_L$ der Kurzschlussspule 16 - kaum schwankt. Folglich haben herstellungsbedingte Toleranzschwankungen oder äußere Einflüsse, wie temperaturbedingte Widerstandsänderungen bei diesem Koppelfaktor noch kaum Auswirkungen auf das Gesamtsystem. Somit stellt der effektive Koppelfaktor $k_{eff}$ von 27,5 % hier einen optimalen Koppelfaktor dar, aus dem dann die entsprechende Streuinduktivität $L_s$ oder der Streuübertragerkern berechnet und dimensioniert werden kann, die dann zu einer Stabilisierung der Betriebsinduktivität und verbesserten Gesamtübertragung von Daten oder Energie führt.

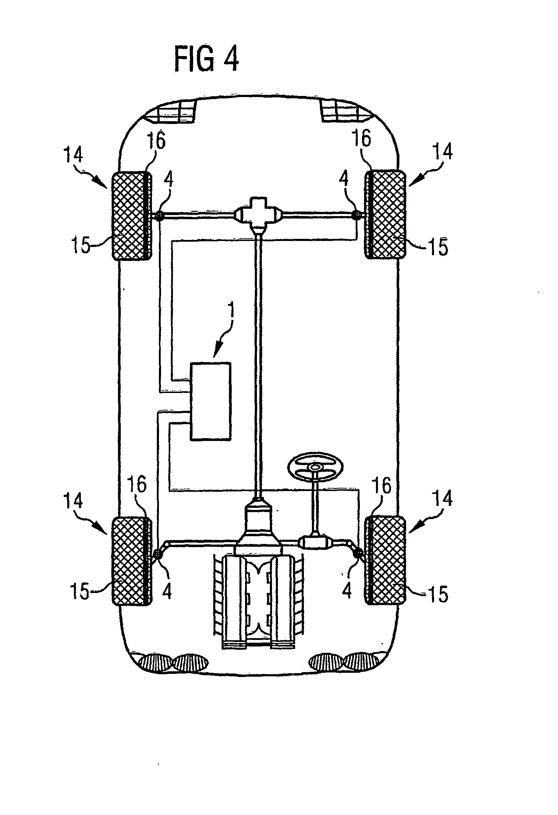

Anhand der Figuren 4 bis 6 wird die Verwendung der erfindungsgemäßen Vorrichtung bei einem Reifendruckmesssystem für ein Kraftfahrzeug näher erläutert. Funktionell identische Teile tragen in den Figuren 4 bis 6 die selben Bezugszeichen wie in den Figuren 1 und 2.

Von einer Basisstation (Primärkreis 1) werden über je eine Antenne 4 in der Nähe eines jeden Rades 14 (Figur 4) Energiesignale zu Transpondern in den Reifen 15 ausgesendet. Jeder Transponder verwendet die empfangene Energie dazu, den Druck oder die Temperatur im Reifen 15 zu messen und in einem Datensignal zurück zu Basisstation zu senden. Die Druckwerte können dann für jede Radposition dem Fahrer dargestellt werden und insbesondere kann dem Fahrer bei unzulässig hohem Druckverlust oder zu hohem Druck oder Temperatur in einem Reifen eine Alarmmeldung ausgegeben werden.

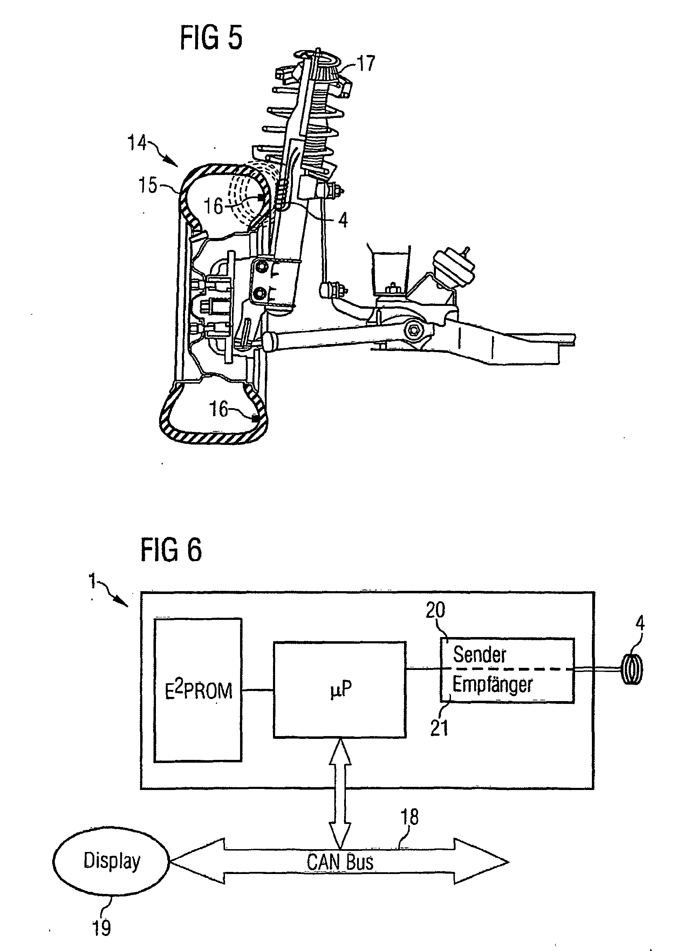

In jedem Reifen 15 des Kraftfahrzeugs ist als Sende- und Empfangsantenne die Kurzschlussspule 16 an der Innenseite oder in dem Gummi eines jeden Reifens 15 angeordnet. Über den. Ringkern 8 ist die Kurzschlussspule 16 mit dem Sekundärkreis 3 induktiv gekoppelt. Jeder Kurzschlussspule 16 ist eine Antenne 4 der Basisstation räumlich derart zugeordnet, dass eine möglichst gute Übertragung stattfindet. Damit Energie und/oder Daten vom Primärkreis 1 gut in die Kurzschlussspule 16 eingekoppelt werden, ist die Antenne 4 beispielsweise am Federbein 17 (Figur 5) auf Höhe der Kurzschlussspule 16 befestigt. Dann weist selbst bei sich drehendem Rad jede Antenne 4 den gleichen, möglichst kurzen Abstand zu der jeweils zugeordneten Kurzschlussspule 16 auf. In der Kurschlussspule 16 wird dann - unabhängig von der Raddrehung - immer die gleiche Spannung durch das Magnetfeld der fahrzeugseitigen Antenne 4 induziert und es fließt in jeder Radwinkeistellung ein gleich hoher Strom.

Die Kürzschlussspule 16 ist vorteilhafterweise aus Stahl hergestellt (daher auch als Stahlring bezeichnet), der auch bei extremer Belastung, wie Walkarbeit des Reifens, nicht brechen soll. Der Stahlring ist dann an der Innenseite derjenigen Seitenwand des Reifens 15 oder in dem Reifenmaterial auf der Seite befestigt, die zum Federbein 17 hin und damit zur Antenne 4 der Basisstation hin gerichtet ist.

Zum möglichst effektiven Übertragen von Energie oder Daten ist die Antenne 4 der Basisstation als Spule auf einem Ferritkern 5 mit hoher Permeabilität gewickelt. Der Ferritkern 5 ist etwa parallel zur Windungsfläche des Stahlrings angeordnet, damit das Magnetfeld (Feldlinien sind andeutungsweise in der Figur 5 gepunktet dargestellt) der Antenne 4 gut in die Kurzschlussspule 16 eingekoppelt wird.

In der Figur 6 ist die Basisstation im Einzelnen dargestellt. Die Basisstation empfängt die von jedem Transponder ausgesendeten Signale über mehrere, den Rädern zugeordnete Antennen.

Jede Antenne 4 leitet das jeweils empfangene Signal über einen Empfänger an einen Mikroprozessor $\mu$P. Die aus dem Signal demodulierten Daten (wie Reifendruck, Temperatur im Reifen öder Kennung des Reifens) werden dem Mikroprozessor $\mu$P zugeführt.

Der Mikroprozessor $\mu$P ist mit einem Daten-Speicher $E^2$PROM verbunden. In diesem Speicher $E^2$PROM können Soll- oder Referenzwerte für Reifenfülldruck (minimal und/oder maximal zugelassene Druckwerte), Referenztemperatur, Zuordnungen von Kennungen zu Radposition usw. gespeichert sein.

Die Basisstation kann über einen Daten-Bus 18 des Kraftfahrzeugs, beispielsweise einem CAN-Bus, mit anderen elektronischen Einheiten im Kraftfahrzeug verbunden sein.

Bereits im Reifen 15 können die gemessenen Druckwerte mit Sollwerten verglichen werden. Dies kann auch in der Basisstation geschehen, wobei die Soll- oder Referenzwerte in dem Speicher $E^2$PROM abgelegt sind. Falls ein Sollwert unter- oder überschritten wird, kann eine Information oder eine Warnmeldung über den Bus 18 an den Fahrer erfolgen, indem die information durch eine Anzeigeeinheit 19 optisch und/oder akustisch angezeigt wird.

Bei Unterschreiten oder Überschreiten der Referenzdruckwerte wird ein Warnsignal ausgegeben, durch das dem Fahrer die jeweilige Radposition mitgeteilt wird, bei der ein Reifen 15 mit zu niedrigem oder zu hohem Druck vorliegt.

Die Anzeigeeinheit 19 ist vorteilhafterweise im Blickfeld des Fahrers angeordnet, beispielsweise in der Instrumententafel.

Die Basisstation weist einen Sender 20 und einen Empfänger 21 auf, mit deren Hilfe Daten oder Energie über eine oder mehrere Antennen 4 zu den einzelnen Transpondern in den Reifen 15 gesendet werden bzw. von dort empfangen werden können. Das Senden und das Empfangen geschieht vorteilhafterweise jeweils über eine Antenne 4, die jeweils einer Radposition mit einem Reifen 15 sowie dem darin befindlichen Transponder zugeordnet ist.

Als Streuinduktivität kann jede zusätzlich in den Sekundärkreis 3 eingebrachte Induktivität (Impedanz) angesehen werden, die gezielt die magnetische Kopplung zwischen Zwischenkreis 2 und Sekundärkreis 3 reduziert, und somit die Bedämpfung des Sekundärkreis 3 durch die geringe Güte des Zwischenkreis 2 reduziert. Die Gesamtübertragungseigenschaften werden dadurch verbessert.

**Patentansprüche**

1. Vorrichtung zum induktiven Übertragen von Energie und/oder Daten von einem Primärkreis (1), der zumindest eine Sende-und Empfangsantenne (4) aufweist, auf einen Sekundärkreis (3), der einen Schwingkreis mit zumindest einer Sekundärspule (9) und einem Kondensator ($C_T$) aufweist, wobei zwischen dem Primärkreis (1) und dem Sekundärkreis (3) ein magnetischer Zwischenkreis (2) mit einer Antenne (16) angeordnet ist, die mit dem Primärkreis (1) und über ein Koppelelement (8, 10) auch mit dem Sekundärkreis (3) induktiv gekoppelt ist, **dadurch gekennzeichnet, dass** in dem Sekundärkreis (3) eine zusätzliche Streuinduktivität ($L_S$) angeordnet ist, die von der Sekundärspule (9) magnetisch entkoppelt ist, und/oder das Koppelelement (8, 10) einen Streuzweig (12) aufweist, dessen magnetischer Fluss nicht zugleich Koppelfluss vom Sekundärkreis (3) und vom Zwischenkreis (2) ist, wodurch die magnetische Kopplung zwischen Zwischenkreis (2) und Sekundärkreis (3) zwar reduziert wird, jedoch die Gesamteffektivität der Übertragung vom Primärkreis (1) auf den Sekundärkreis (3) Verbessert wird.

2. Vorrichtung nach Anspruch 1, **dadurch gekennzeichnet, dass** das Koppelelement durch einen Streuübertragerkern (10) gebildet wird, der zumindest einen Koppelzweig (11) und einen Streuzweig (12) aufweist, wobei der magnetische Fluss des Streuzweigs (12) nicht zugleich mit der Sekundärspule (9) und der Antenne (16) des Zwischenkreises (2) induktiv gekoppelt ist.

3. Vorrichtung nach Anspruch 1, **dadurch gekennzeichnet, dass** der Streuübertragerkern (10) aus einem permeablen Material hergestellt ist.

4. Vorrichtung nach einem der vorhergehenden Ansprüche, **dadurch gekennzeichnet, dass** der Primärkreis (1) und der Sekundärkreis (3) zum induktiven Übertragen von Energie oder Daten bei einem Reifendruckmesssystem eines Kraftfahrzeugs ausgebildet sind, wobei der Primärkreis (1) fahrzeugseitig und der Zwischenkreis (2) sowie der Sekundärkreis (3) reifenseitig angeordnet sind.

**Revendications**

1. Dispositif pour la transmission par induction d'énergie et/ou de données à partir d'un circuit primaire (1), lequel présente au moins une antenne (4) d'émission et de réception, vers un circuit secondaire (3), lequel présente un circuit oscillant avec au moins une bobine secondaire (9) et un condensateur ($C_T$), dans lequel un circuit magnétique intermédiaire (2) avec une antenne (16) est disposé entre le circuit primaire (1) et le circuit secondaire (3), ce circuit étant couplé par induction avec le circuit primaire (1) et aussi avec le circuit secondaire (3) par un élément de couplage (8, 10), **caractérisé par le fait qu'**une inductance de fuite ($L_S$) est disposée dans le circuit secondaire (3), cette inductance étant découplée magnétiquement de la bobine secondaire (9), et/ou que l'élément de couplage (8, 10) présente une branche de fuite (12) dont le flux magnétique n'est pas en même temps le flux de couplage du circuit secondaire (3) et du circuit intermédiaire (2), grâce à quoi le couplage magnétique entre le circuit intermédiaire (2) et le circuit secondaire (3) est réduit, mais néanmoins l'efficacité globale de la transmission à partir du circuit primaire (1) vers le circuit secondaire (3) est améliorée.

2. Dispositif selon la revendication 1, **caractérisé en ce que** l'élément de couplage est constitué par un noyau retransmetteur de fuites (10) présentant au moins une branche de couplage (11) et une branche de fuite (12), dans lequel le flux magnétique de la branche de fuite (12) n'est pas en même temps couplé par induction avec la bobine secondaire (9) et l'antenne (16) du circuit intermédiaire (2).

3. Dispositif selon la revendication 1, **caractérisé en ce que** le noyau retransmetteur de fuites (10) est fabriqué dans un matériau perméable.

4. Dispositif selon l'une des revendications précédentes, **caractérisé en ce que** le circuit primaire (1) et le circuit secondaire (3) sont configurés pour la transmission par induction d'énergie ou de données dans un système de mesure de la pression des pneus dans un véhicule automobile, dans lequel le circuit primaire (1) est installé sur le véhicule tandis que le circuit intermédiaire (2) et le circuit secondaire (3) sont installés sur le pneu.

**Claims**

1. Device for the inductive transmission of energy and/or data from a primary circuit (1), which has at least one transmitting and receiving antenna (4), to a secondary circuit (3), which has a tuned circuit having at least one secondary coil (9) and one capacitor ($C_T$), it being the case that between the primary circuit (1) and the secondary circuit (3) there is arranged an inductive intermediate circuit (2) having an antenna (16) that is inductively coupled via a coupling element (8, 10) to the primary circuit (1) and also to the secondary circuit (3),

**characterized in that** an additional leakage inductor ($L_S$) that is inductively decoupled from the secondary coil (9) is arranged in the secondary circuit (3), and/or the coupling element (8, 10) has a leakage branch (12), the magnetic flux of which is not at the same time the coupling flux of the secondary circuit (3) and of the intermediate circuit (2), as a result of which the inductive coupling between the intermediate circuit (2) and the secondary circuit (3) is reduced, but the overall effectiveness of transmission from the primary circuit (1) to the secondary circuit (3) is improved.

2. Device according to Claim 1, **characterized in that** the coupling element is formed by a leakage transfer core (10) having at least one coupling branch (11) and one leakage branch (12), it being the case that the magnetic flux of the leakage branch (12) is not at the same time inductively coupled with the secondary coil (9) and the antenna (16) of the intermediate circuit.

3. Device according to Claim 1, **characterized in that** the leakage transfer core (10) is manufactured from a permeable material.

4. Device according to one of the preceding claims, **characterized in that** the primary circuit (1) and the secondary circuit (3) are designed for the inductive transmission of energy or data in a tire pressure measurement system of a motor vehicle, it being the case that the primary circuit (1) is arranged onboard the vehicle and the intermediate circuit (2) and the secondary circuit (3) are arranged onboard the tire.

## FIG 1

## FIG 2A

## FIG 2B

8

FIG 3A

FIG 3B

FIG 3C

# FIG 4

## FIG 5

## FIG 6